# EUROPÄISCHE PATENTSCHRIFT

(11) **EP 3 415 053 B1**
(45) Veröffentlichungstag und Bekanntmachung des Hinweises auf die Patenterteilung: **27.11.2019**
(21) Anmeldenummer: 17175519.2
(22) Anmeldetag: 12.06.2017
(51) Int. Cl.: A47J 31/44, A47J 31/60

(54) **GETRÄNKEZUBEREITUNGSVORRICHTUNG SOWIE REINIGUNGSVERFAHREN**
BEVERAGE PREPARATION DEVICE AND METHOD OF CLEANING
DISPOSITIF DE PRÉPARATION DE BOISSONS ET PROCÉDÉ DE NETTOYAGE

(43) Veröffentlichungstag der Anmeldung: 19.12.2018
(73) Patentinhaber: Eugster/Frismag AG, 8580 Amriswil (CH)
(72) Erfinder: RIESSBECK, Wolfgang, 8597 Landschlacht (CH); WÄGER, Simon, 8580 Amriswil (CH)
(74) Vertreter: Patentanwälte Behrmann Wagner PartG mbB

(56) Entgegenhaltungen:
- EP-A1- 2 353 472
- EP-A1- 2 695 555
- EP-B1- 2 564 739

## Beschreibung

Die Erfindung betrifft eine Getränkezubereitungsvorrichtung gemäß dem Oberbegriff des Anspruchs 1, insbesondere eine Kaffeemaschine, mit einer Einrichtung zum Verarbeiten einer Flüssigkeit, insbesondere zum Erwärmen und/oder Aufschäumen von Milch, und mit einer, insbesondere einen flexiblen Schlauch und/oder ein starres Rohrstück umfassenden, ein einen Fluidkanal umfassendes Anschlussende zum fluidleitenden, lösbaren Verbinden mit einem Vorratsbehälter, insbesondere einem Milchvorratsbehälter, aufweisenden Verbindungsleitung, über die der Einrichtung zum Verarbeiten der Flüssigkeit Flüssigkeit, insbesondere Milch, zuführbar ist und mit Reinigungsmediumversorgungsmitteln zum Durchspülen (Spülen) der Verbindungsleitung mit einem Reinigungsmedium, insbesondere Wasser und/oder Dampf, in einer Reinigungsposition der Verbindungsleitung, in der das Anschlussende über, ein- oder mehrteilige, Fixiermittel relativ zu einem Auffangbehältnis für das Reinigungsmedium (nach Durchströmen der Verbindungsleitung), insbesondere einer Tropfschale, fixiert und die Verbindungsleitung fluidleitend mit dem Auffangbehältnis verbunden ist, wobei das Anschlussende eine Stirnseite und eine sich in einer Umfangsrichtung um den Fluidkanal erstreckende, bevorzugt rotationssymmetrische Außenumfangsmantelfläche aufweist. Bevorzugt ist die Außenumfangsmantelfläche zumindest näherungsweise kreiszylindrisch oder konisch konturiert und/oder umfasst mindestens einen, insbesondere mehrere kreiszylinderförmige und/oder konische Außenumfangsmantelflächenabschnitte, insbesondere mit unterschiedlichen Durchmessern. Bei der Getränkezubereitungsvorrichtung kann es sich beispielsweise um einen Kaffeevollautomaten oder eine Portionseinheitenmaschine, wie eine Kapselmaschine, handeln. Unabhängig davon wird im Falle der Ausbildung der Getränkezubereitungsvorrichtung als Kaffeemaschine ein Kaffeesubstrat, insbesondere Kaffeemehlpulver, in einer Brühkammer aufgelöst und/oder ausgelaugt, um in an sich bekannter Weise ein Kaffeegetränk zu erzeugen. Die Erfindung ist jedoch nicht auf Kaffeemaschinen beschränkt, sondern betrifft zunächst alle denkbaren Getränkezubereitungsvorrichtungen, insbesondere für den Haushalts- und/oder Gastronomiebereich. Der Vorratsbehälter, insbesondere ein Milchvorratsbehälter, kann gemäß einer ersten Ausführungsvariante Bestandteil der Getränkezubereitungsvorrichtung sein und bevorzugt relativ zu einem Gehäuse der Getränkezubereitungsvorrichtung, noch weiter bevorzugt lösbar fixierbar sein. Gemäß einer zweiten alternativen Ausführungsform ist der Vorratsbehälter nicht Bestandteil der Getränkezubereitungsvorrichtung und wird beispielsweise im einfachsten Fall von einer Flüssigkeitsverpackung, insbesondere einer Milchverpackung, gebildet.

Ferner führt die Erfindung auf ein Verfahren gemäß dem Oberbegriff des Anspruchs 12 zum Reinigen (Spülen) einer, insbesondere einen flexiblen Schlauch und/oder ein starres Rohrstück umfassenden, ein einen Fluidkanal umfassendes Anschlussende zum fluidleitenden, lösbaren Verbinden mit einem Vorratsbehälter, insbesondere einem Milchvorratsbehälter, aufweisenden Verbindungsleitung einer, bevorzugt nach dem Konzept der Erfindung ausgebildeten, Getränkezubereitungsvorrichtung gemäß dem Oberbegriff des Anspruchs 1.

Insbesondere für die Herstellung von Getränken mit Milch und/oder Milchschaum, beispielsweise Cappuccino, Latte Macchiato, heißer Milch, Kaltschaumgetränken, etc. wird Milch aus einem Vorratsbehälter einer Einrichtung zum Erwärmen und/oder Aufschäumen der Milch zugeführt. Hierzu wird der Vorratsbehälter mit der Einrichtung über eine Verbindungsleitung verbunden und kann von dieser wieder durch Lösen der Verbindungsleitung, insbesondere des Anschlussendes, vom Vorratsbehälter getrennt werden, um die Verbindungsleitung mit Wasser und/oder Dampf an ihrem Innenumfang zu spülen. Hierzu ist es aus der EP 2 564 739 B1 bekannt, das Anschlussende der Verbindungsleitung über ein Klemmelement an einem Tropfschalendeckel zu fixieren, so dass das Reinigungsmedium aus der Verbindungsleitung unmittelbar in die Tropfschale gelangt. Nachteilig dabei ist, dass eine sich im Wesentlichen senkrecht zur Stirnseite des Anschlussendes der Verbindungsleitung erstreckende, umfangsgeschlossene Außenumfangsmantelfläche des Anschlussendes, die durch den vorhergehenden Anschluss an den vorerwähnten Vorratsbehälter mit Flüssigkeit, meist Milch, verschmutzt sein kann, nicht gespült wird.

Aus der EP 2 695 555 A1 ist eine Vorrichtung zum Reinigen des Milchsystems bei Kaffeevollautomaten bekannt. Der Kaffeevollautomat weist eine Einrichtung zum Verarbeiten und Aufschäumen von Milch auf, sowie ein Verfahren zum Reinigen eines Milchschlauchs. Der Milchschlauch ist als Fluidkanal fluidleitend ausgebildet und umfasst ein Milchrohr zum lösbaren Verbinden mit einem Milchbehälter. Über den Milchschlauch ist dem Kaffeevollautomaten die Milch zu deren Verarbeitung zuführbar. Der Kaffeevollautomat umfasst zudem Reinigungsmediumversorgungsmitteln zum Durchspülen des Milchschlauchs mit einem Reinigungsmedium in einer Reinigungsposition des Milchschlauchs, in der das Milchrohr über einen Verschluss relativ zu einem Auffangbehältnis für das Reinigungsmedium fixiert und der Milchschlauch fluidleitend mit dem Auffangbehältnis verbunden ist. Das Milchrohr weist eine Stirnseite und eine sich in einer Umfangsrichtung um den Fluidkanal erstreckende Außenumfangsmantelfläche auf. Das Milchrohr ragt in der Reinigungsposition derart in einen fluidleitend mit dem Auffangbehältnis verbundenen Reinigungsbehälter hinein, dass diese mit dem Reinigungsbehälter über den Milchschlauch zuführbarem und sich in dem Reinigungsbehälter rückstauenden Reinigungsmedium spülbar ist.

Bei diesem Kaffeevollautomaten muss jedoch das Reinigungs- bzw. Schmutzwasser nach der Reinigung aus dem Reinigungsbehälter wieder abgesaugt werden.

Ausgehend von dem vorgenannten Stand der Technik liegt der Erfindung die Aufgabe zugrunde, eine hinsichtlich der Reinigbarkeit des Anschlussendes der Verbindungsleitung verbesserte Getränkezubereitungsvorrichtung sowie ein entsprechend verbessertes Reinigungsverfahren für eine solche Verbindungsleitung anzugeben. Dabei soll sichergestellt werden, dass die Verbindungsleitung nicht nur an ihrem Innenumfang während des Spülvorgangs mit Reinigungsmedium gespült wird, sondern auch im Bereich der Außenumfangsmantelfläche des Anschlussendes.

Diese Aufgabe wird hinsichtlich der Getränkezubereitungsvorrichtung mit den Merkmalen des Anspruchs 1 gelöst, bei einer gattungsgemäßen Getränkezubereitungsvorrichtung also dadurch, dass das Anschlussende in der Reinigungsposition derart in eine fluidleitend mit dem Auffangbehältnis verbundene Spülkammer mit seiner Außenumfangsmantelfläche hineinragt, dass diese mit dem der Spülkammer über die Verbindungsleitung zuführbaren und sich in der Spülkammer rückstauenden Reinigungsmedium spülbar ist.

Im einfachsten Fall handelt es sich bei dem Anschlussende um ein Schlauch- oder Rohrende der Verbindungsleitung. Besonders bevorzugt ist jedoch eine Ausführungsform, bei der es sich bei dem Anschlussende der Verbindungsleitung um ein von einem flexiblen Schlauch und/oder einer Rohrleitung der Verbindungsleitung separates Endstück handelt, welches an dem Schlauch und/oder der Rohrleitung endseitig fixiert ist. So kann es sich in einer ganz besonders bevorzugten Ausgestaltung bei dem Anschlussende beispielsweise um einen sogenannten Fluid-Nippel, beispielsweise aus Kunststoff oder Metall, handeln.

Hinsichtlich des Verfahrens wird die Aufgabe mit den Merkmalen des Anspruchs 12 gelöst, d.h. bei einem gattungsgemäßen Verfahren dadurch, dass das Anschlussende in der Reinigungsposition in eine fluidleitend mit dem Auffangbehältnis verbundene Spülkammer mit seiner Außenumfangsmantelfläche hineinragt, und dass sich das über die Verbindungsleitung zugeführte Reinigungsmedium in der Spülkammer rückstaut und die Außenumfangsmantelfläche spült.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen. Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale auch als vorrichtungsgemäß offenbart gelten und beanspruchbar sein.

Der Erfindung liegt der Gedanke zugrunde, in Strömungsrichtung des Reinigungsmediums zum Durchspülen der Verbindungsleitung vor dem Auffangbehältnis, insbesondere einer Tropfschale, zum Auffangen des die Verbindungsleitung während des Reinigungs- bzw. Spülvorgangs durchströmenden Reinigungsmediums eine Spülkammer anzuordnen bzw. dem Auffangbehältnis vorzuschalten, die derart ausgebildet ist, dass in dieser das in die Spülkammer durch die Verbindungsleitung einströmende Reinigungsmedium rückstaubar ist bzw. rückgestaut wird. Ferner ragt das Anschlussende mit seiner Außenumfangsmantelfläche frei in die Spülkammer hinein, so dass das sich rückstauende Reinigungsmedium in Kontakt mit der Außenumfangsmantelfläche kommt, insbesondere entlang von dieser strömt und/oder verwirbelt wird, um jedenfalls so die Außenumfangsmantelfläche zu spülen, insbesondere zu umspülen, und von anhaftenden Flüssigkeitsresten, insbesondere Milchresten, zu reinigen. Das die Verschmutzungsreste aufnehmende Reinigungsmedium verlässt mit den Verschmutzungsresten die Spülkammer in Richtung Auffangbehältnis. Anders ausgedrückt bietet die erfindungsgemäße Getränkezubereitungsvorrichtung bzw. bietet das erfindungsgemäße Reinigungsverfahren durch das Vorsehen einer Spülkammer, in die das in der Reinigungsposition fixierte Anschlussende der Verbindungsleitung in der Reinigungsposition hineinragt, eine Rückstaumöglichkeit für Reinigungsmedium aus der Verbindungsleitung, wobei die Kontur, insbesondere der Außendurchmesser der Außenumfangsmantelfläche des Anschlussendes so auf die Spülkammerinnendimension abgestimmt ist, dass sich rückstauendes Spülmedium die Außenumfangsmantelfläche erreicht bzw. spült, wobei die Verschmutzungsreste mit dem Reinigungsmedium die Spülkammer in das Auffangbehältnis hinein verlassen. Ganz besonders bevorzugt ist es, wenn auch die (axiale) Stirnseite des Anschlussendes frei bzw. mit Abstand zu einer Wand, insbesondere einer Bodenfläche der Spülkammer, in diese hineinragt, so dass zusätzlich zur Außenumfangsmantelfläche auch die Stirnseite des Anschlussendes reinigbar ist bzw. gespült wird. Die im Stand der Technik vorhandenen Nachteile werden durch die erfindungsgemäße Getränkezubereitungsvorrichtung sowie das erfindungsgemäße Reinigungs- bzw. Spülverfahren überwunden.

Bevorzugt handelt es sich bei der Außenumfangsmantelfläche um eine bzw. diejenige Außenumfangsmantelfläche des Anschlussendes, mit der dieses in den Vorratsbehälter hineinragt und/oder mit welcher das Anschlussende mit dem Vorratsbehälter in mechanischem Kontakt steht.

Ganz besonders bevorzugt erfolgt das Spülen mit, bevorzugt erhitztem, Wasser und/oder Dampf, der von entsprechenden Reinigungsmediumversorgungsmitteln bereitgestellt wird. Je nach Ausgestaltung der Reinigungsmediumversorgungsmittel umfassen diese eine Pumpe und/oder Dampferzeugungsmittel und/oder Erhitzungsmittel zum Erhitzen von Flüssigkeit, insbesondere Wasser, und/oder zur Dampferzeugung. Die Fördermenge (Volumenstrom), die Temperatur und/oder der Druck des Reinigungsmediums können in Weiterbildung der Erfindung variierbar sein.

Erfindungsgemäß ist vorgesehen, dass die Spülkammer mindestens eine Auslassöffnung aufweist, über die das Reinigungsmedium unmittelbar oder über eine an die Anschlussöffnung anschließende Leitung in das Auffangbehältnis aus der Spülkammer abströmen kann. Grundsätzlich ist es möglich, lediglich eine einzige Auslassöffnung vorzusehen, welche zentral oder dezentral, insbesondere in einer Bodenfläche, insbesondere in einer Senke einer Bodenfläche, angeordnet sein kann. Alternativ ist es möglich, mehrere Auslassöffnungen vorzusehen und diese beispielsweise gleichmäßig verteilt anzuordnen, wobei es bevorzugt ist, wenn sämtliche Auslassöffnungen in einer gemeinsamen oder jeweils einer Senke, insbesondere einer Bodenfläche bzw. Bodenwand der Spülkammer, angeordnet sind.

Bevorzugt ist die mindestens eine Auslassöffnung zur Vereinfachung des Systems ständig geöffnet und, wie zuvor erläutert, dimensioniert. Alternativ ist es denkbar, Verschlussmittel vorzusehen, mit denen die mindestens eine Auslassöffnung querschnittsveränderlich und/oder verschließbar ist, um ein Rückstauen von Reinigungsmedium zu bewirken.

In Weiterbildung der Erfindung ist nun vorgesehen, dass eine freie Querschnittsfläche der mindestens einen Auslassöffnung, insbesondere der freien Auslassöffnungen (im letztgenannten Fall also die gesamtfreie Querschnittsfläche der Auslassöffnungen) kleiner dimensioniert ist als eine freie Querschnittsfläche der Verbindungsleitung, um insoweit ein Rückstauen von Reinigungsmedium während des Reinigungsbetriebsmodus der Getränkezubereitungsvorrichtung zu begünstigen.

Besonders zweckmäßig ist es, wenn die, bevorzugt eine Pumpe und/oder einen Dampferzeuger und/oder einen Durchlauferhitzer umfassenden, Reinigungsmediumversorgungsmittel derart dimensioniert und/oder über eine Steuerelektronik derart angesteuert sind, dass in die Spülkammer mehr Reinigungsmedium in einer Zeitspanne über die Verbindungsleitung zuströmt als über die mindestens eine Auslassöffnung in Richtung Auffangbehältnis abströmt. Anders ausgedrückt ist der Fördervolumenstrom des Reinigungsmediums in der Weiterbildung der Erfindung so ausgelegt bzw. bemessen, dass zum Rückstauen von Reinigungsmedium in einer vorgegebenen Zeitspanne mehr Reinigungsmedium zuströmt als aus der Spülkammer in Richtung Auffangbehältnis abströmen kann.

Um eine vollumfängliche Reinigung der Außenumfangsmantelfläche zu ermöglichen, ist diese in Weiterbildung der Erfindung vollumfänglich in radialer Richtung bezogen auf eine Längserstreckung bzw. Längsachse des Fluidkanals von einer radial gegenüberliegenden Umfangswand der Spülkammer beabstandet. Denkbar ist auch eine Ausführungsform, bei der diese Beabstandung nicht vollumfänglich, sondern nur über Abschnitte des Umfangs realisiert ist, wobei dann jedoch der Reinigungseffekt verschlechtert ist, in den Bereichen, in denen die Außenumfangsmantelfläche die Umfangswand berührt. Unabhängig davon beträgt ein Abstand in radialer Richtung zwischen der Außenumfangsmantelfläche und der jeweils in radialer Richtung gegenüberliegenden Umfangswand bevorzugt mehr als 2mm, bevorzugt mehr als 4mm, ganz besonders bevorzugt mehr als 6mm, noch weiter bevorzugt mehr als 10mm, um eine gute Umspülbarkeit der Außenumfangsmantelfläche in der Spülkammer mit rückstauendem Reinigungsmedium zu ermöglichen.

Ganz besonders bevorzugt ist eine Ausführungsform der Getränkezubereitungsvorrichtung, bei der die Spülkammer in der Reinigungsposition, insbesondere entgegen einer Einsteckrichtung des Anschlussendes in die Spülkammer, von dem Anschlussende selbst begrenzt wird, und zwar bevorzugt von einem axial zur umspülbaren Außenumfangsmantelfläche benachbarten Ringschulter, die die Außenumfangsmantelfläche in radialer Richtung überragt.

Wie bereits erwähnt ist es bevorzugt, wenn eine Auslassöffnung oder mehrere Auslassöffnungen der Spülkammer in einer bei bestimmungsgemäßer Aufstellung der Getränkezubereitungsvorrichtung auf einer horizontalen Aufstellfläche unteren Bodenfläche vorgesehen sind, ganz besonders bevorzugt im Bereich mindestens einer Senke. Zur Realisierung einer derartigen Senke ist es bevorzugt, die Bodenfläche geneigt auszubilden zu einer horizontalen Abstützfläche der Vorrichtung, die beispielsweise von Stützfüßen gebildet ist, wobei sich die Getränkezubereitungsvorrichtung mittels dieser, insbesondere mehrteiligen, Abstützfläche auf einer horizontalen Aufstellfläche abstützt.

Im Hinblick auf die konkrete Ausgestaltung und Anordnung der Fixiermittel gibt es unterschiedliche Möglichkeiten. Ganz besonders bevorzugt ist eine Ausführungsform, bei der die Fixiermittel einteilig, insbesondere monolithisch, mit der Spülkammer ausgebildet sind. Bei einer alternativen Ausführungsform können die Fixiermittel an der Spülkammer festgelegt oder relativ zu dieser ortsfest angeordnet sein.

Besonders zweckmäßig ist eine Ausführungsform, bei der die Fixiermittel aus einem Elastomermaterial ausgebildet sind oder ein solches umfassen. Bei einer einteiligen Ausbildung der Fixiermittel mit der Spülkammer ist dann auch diese aus Elastomermaterial ausgebildet. Bevorzugt kommt als Elastomermaterial ein Silikonmaterial zum Einsatz. Unabhängig von der Materialwahl der Fixiermittel sind diese bevorzugt derart ausgebildet, dass mit diesen das Anschlussende, insbesondere benachbart zur zu spülenden Außenumfangsmantelfläche durch Klemmen und/oder Formschluss fixierbar ist, wobei der Formschluss bevorzugt in radialer Richtung bezogen auf eine Längserstreckung des Anschlussendes wirkt, also derart, dass die Fixiermittel und das Anschlussende in radialer Richtung ineinandergreifen, insbesondere durch lösbares, insbesondere verrastendes radiales Eingreifen eines nach radial innen weisenden Fortsatzes, insbesondere eines Ringabschnitts der Fixiermittel in eine entsprechende Außenumfangsringnut des Anschlussendes.

Die Ausbildung der Fixiermittel und/oder der Spülkammer aus Elastomermaterial hat den Vorteil der einfachen Realisierung einer Abdichtung der Spülkammer, um ein Austreten von sich zurückstauendem Spülmedium entgegen einer Einsteckrichtung zu vermeiden. Zusätzlich oder alternativ zu einer Elastomermaterialausbildung der Fixiermittel und/oder der Spülkammer kann auch mindestens eine Elastomerdichtung eingesetzt werden und/oder das Anschlussende aus einem Elastomermaterial ausgebildet sein, welches alternativ als starres Element ausgebildet ist, insbesondere als Kunststoffspritzgussteil.

Im Hinblick auf die Anordnung der Spülkammer an der Getränkezubereitungsvorrichtung gibt es unterschiedliche Möglichkeiten. Ganz besonders bevorzugt ist eine Ausführungsform, bei der die Spülkammer im Bereich und/oder an dem Auffangbehältnis angeordnet und/oder einteilig mit einem Auffangbehältnisabschnitt verbunden ist, insbesondere lösbar durch Verrasten. Eine derartige Ausführungsform hat den Vorteil, dass das Reinigungsmedium aus der Spülkammer unmitteilbar in das Auffangbehältnis strömen kann. Es sind jedoch auch alternative Ausführungsformen realisierbar, bei denen die Spülkammer mit Abstand zu dem Auffangbehältnis angeordnet ist, insbesondere derart, dass eine fluidleitende Verbindung, beispielsweise ein Schlauch und/oder eine Rohrverbindung vorgesehen ist, um die Spülkammer fluidleitend mit dem Auffangbehältnis zum Auffangen von Reinigungsmedium verbunden ist.

Wie eingangs erwähnt ist es bevorzugt, wenn die Außenumfangsmantelfläche rotationssymmetrisch ist und ganz besonders bevorzugt eine Kreiszylinderform aufweist und/oder mehrere, insbesondere voneinander unterschiedliche Durchmesser aufweisende, axial benachbarte, bevorzugt kreiszylindrische oder konische Außenumfangsmantelflächenabschnitte aufweist. Ganz besonders bevorzugt ist es, wenn die in der Spülkammer durch Rückstauen spülbare Axialerstreckung (Längserstreckung) der Außenumfangsmantelfläche aus einem Wertebereich zwischen 3mm und 20mm, insbesondere zwischen 3mm und 12mm, noch weiter bevorzugt zwischen 5mm und 10mm gewählt ist.

Weitere Vorteile, Merkmale und Einzelheiten der Erfindung ergeben sich aus der nachfolgenden Beschreibung eines bevorzugten Ausführungsbeispiels sowie anhand der Zeichnungen.

Diese zeigen in
- Fig. 1:: eine als Kaffeemaschine ausgebildete Getränkezubereitungsvorrichtung mit einem über eine Verbindungsleitung angeschlossenen Vorratsbehälter für eine Flüssigkeit, vorliegend für Milch,
- Fig. 2:: die Getränkezubereitungsvorrichtung gemäß Fig. 1 mit einem sich in einer Reinigungsposition befindlichen Anschlussende der Verbindungsleitung, wobei das Anschlussende in eine Spülkammer der Getränkezubereitungsvorrichtung hineinragt, in der Reinigungsmedium rückstaubar ist,
- Fig. 3:: eine Detailvergrößerung einer bevorzugten Ausführungsform der Spülkammer und des der Spülkammer zugeordneten Anschlussendes der Verbindungsleitung vor der Fixierung des Anschlussendes in der Reinigungsposition,
- Fig. 4:: eine vergrößerte Darstellung des sich in der Reinigungsposition befindlichen Anschlussendes der Verbindungsleitung.

In den Figuren sind gleiche Elemente und Elemente mit der gleichen Funktion mit den gleichen Bezugszeichen gekennzeichnet.

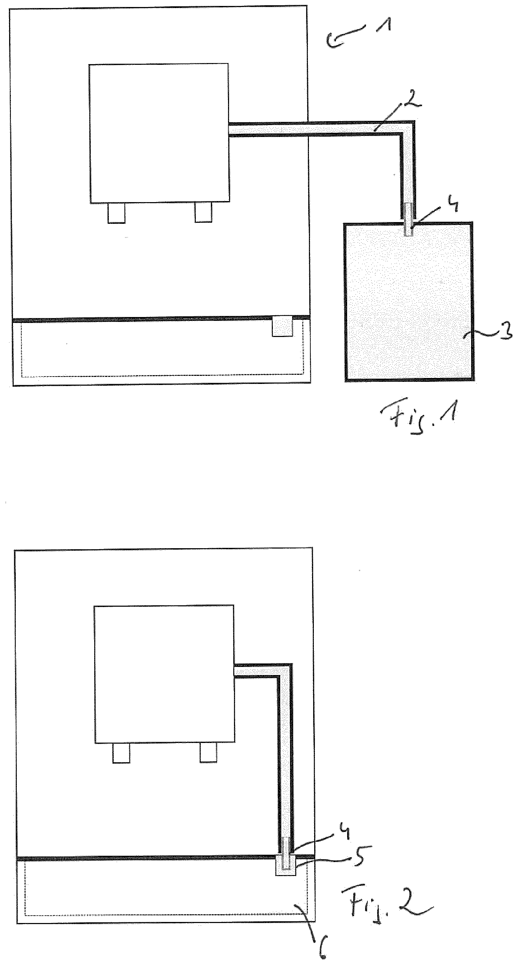

In Fig. 1 ist eine als Kaffeemaschine ausgebildete Getränkezubereitungsvorrichtung 1 gezeigt, mit nicht dargestellter, an sich bekannten Einrichtung zum Verarbeiten einer Flüssigkeit, vorliegend einer Einrichtung zum Erwärmen und/oder Aufschäumen von Milch. Die Einrichtung ist über eine Verbindungsleitung 2 mit einem Vorratsbehälter 3, vorliegend einem mit Milch gefüllten Milchvorratsbehälter, verbunden, um, insbesondere saugend, Milch aus dem Vorratsbehälter zu der vorgenannten Einrichtung zum Verarbeiten der Flüssigkeit, vorliegend zum Erwärmen und/oder Aufschäumen der Milch, zu transportieren. Die Verbindungsleitung 2 weist dabei ein als Fluid-Nippel ausgebildetes Anschlussende 4 aus Kunststoff (Spritzgussteil) auf, welches die fluidleitende Verbindung zum Vorratsbehälter 3 sicherstellt. Fig. 1 zeigt eine Situation während eines Getränkeproduktionsbetriebsmodus, in dem die Flüssigkeit, vorliegend Milch zu Schaum, verarbeitet wird.

Fig. 2 zeigt nun eine Situation während eines an den Getränkeproduktionsbetriebsmodus anschließenden Reinigungsbetriebsmodus, in welchem die Getränkeproduktion abgeschlossen ist und die Verbindungsleitung gereinigt wird. Hierzu befindet sich das Anschlussende 4 in einer Reinigungsposition, in welcher das Anschlussende 4 in eine Spülkammer 5 hineinragt, welche beispielsweise an einem Auffangbehältnis 6, vorliegend einer Tropfschale, angeordnet, insbesondere lösbar fixiert ist.

Während des Reinigungsbetriebsmodus fließt Reinigungsmedium, insbesondere heißes Wasser und/oder Dampf, welches von Reinigungsmediumversorgungsmitteln in die Verbindungsleitung 2 in Richtung Anschlussende 4 gefördert wird durch die Verbindungsleitung in die Spülkammer 5 hinein, staut sich dort zurück und spült das Anschlussende 4 an seiner Außenumfangsmantelfläche.

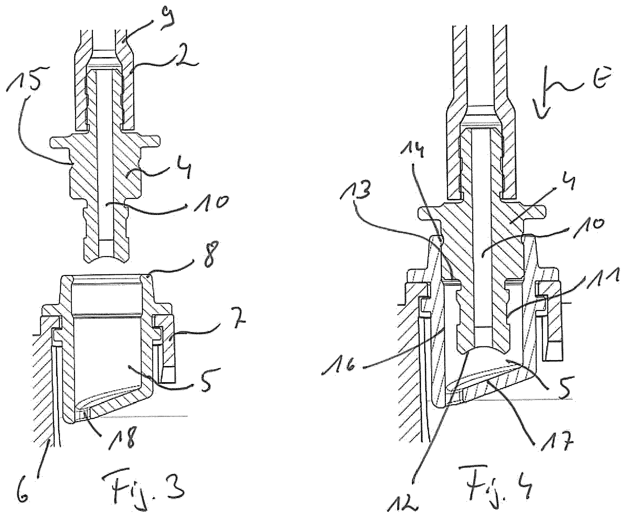

Fig. 3 zeigt nun eine vergrößerte Situation aus den vorstehend erläuterten Figuren. Zu erkennen ist die Spülkammer 5, welche vorliegend aus einem Elastomermaterial, insbesondere einem Silikonmaterial, ausgebildet ist. Die Spülkammer 5 ist lösbar in einer Aufnahme 7 des Auffangbehältnisses 6 fixiert. Die Spülkammer 5 weist integrale Fixiermittel, ebenfalls aus Elastomermaterial, auf zum Fixieren bzw. Halten des Anschlussendes 4 der Verbindungsleitung 2, welche vorliegend einen elastischen Schlauch 9 umfasst, an dem das als Fluidmittel ausgebildete Anschlussende 4 fixiert ist, vorliegend durch Einschieben und Klemmen.

Das Anschlussende 4 umfasst einen, hier beispielhaft und bevorzugt zentrischen, Fluidkanal 10, durch welchen während der Getränkeposition Flüssigkeit in Richtung der vorerläuterten Einrichtung zum Verarbeiten der Flüssigkeit strömt und durch die in dann umgekehrte Richtung Reinigungsmedium, insbesondere Wasser und/oder Dampf, während des Reinigungsbetriebsmodus strömt und zwar in die Spülkammer 5 hinein, in der in Fig. 4 gezeigten Reinigungsposition, in der das Anschlussende 4 mit einer den Fluidkanal 10 außen umgebenden Außenumfangsmantelfläche 11 hineinragt. Die Außenumfangsmantelfläche 11 ist im Wesentlichen zylindrisch ausgebildet und umfasst vorliegend mehrere kreiszylindrische Abschnitte mit voneinander abweichenden Durchmesser. Die Außenumfangsmantelfläche 11 ist rotationssymmetrisch ausgebildet und reicht von einer axialen Stirnseite 12 des Anschlussendes 4 bis zu einer radial vorstehenden Ringschulter 13, die die Spülkammer 5 entgegen einer Einsteckrichtung E begrenzt. Die Abdichtung der Spülkammer 5 entgegen der Einsteckrichtung E erfolgt über die Fixiermittel 8 aus Elastomermaterial, die mit einem nach radial innen vorstehenden Ringabschnitt 14 lösbar in eine korrespondierende Ringnut 15 im Anschlussende mit Abstand zur Außenumfangsmantelfläche 11 eingreift.

Zu erkennen ist, dass ein die Außenumfangsmantelfläche 11 umfassender Endabschnitt bzw. die Außenumfangsmantelfläche 11 frei in die Spülkammer 5 hineinragt, so dass die Außenumfangsmantelfläche 11 in radialer Richtung bezogen auf die axiale Einsteckrichtung E beabstandet ist von einer die Außenumfangsmantelfläche 11 mit Abstand umgebenden Umfangswand 16, vorliegend aus Elastomermaterial, die die Spülkammer 5 radial außen begrenzt. Gleichzeitig ist die Stirnseite 12 beabstandet von einer sich winklig zur Außenumfangswand 16 erstreckenden Bodenfläche 17 (Bodenabschnitt), die die Spülkammer in der Einsteckrichtung E begrenzt. In der Bodenfläche 17, genauer im Bereich einer durch Schrägausbildung der Bodenfläche 17 gebildeten Senke, befindet sich eine dezentrale Auslassöffnung 18, deren freie Querschnittsfläche kleiner gewählt ist als die freie Querschnittsfläche der Verbindungsleitung. Unabhängig davon wird jedenfalls von den Reinigungsmediumversorgungsmitteln ein ausreichend großer Volumenstrom an Reinigungsmedium in die Versorgungsleitung 2 gefördert, dass sichergestellt ist, dass sich Spülmedium in der Spülkammer 5 rückstaut und somit die Außenumfangsmantelfläche 11 des Anschlussendes 4 umspült.

### Bezugszeichenliste

- 1: Getränkezubereitungsvorrichtung
- 2: Verbindungsleitung
- 3: Vorratsbehälter
- 4: Anschlussende
- 5: Spülkammer
- 6: Auffangbehältnis
- 7: Aufnahme
- 8: Fixiermittel
- 9: elastischer Schlauch der Verbindungsleitung
- 10: Fluidkanal
- 11: Außenumfangsmantelfläche
- 12: Stirnseite des Anschlussendes
- 13: Ringschulter
- 14: Ringabschnitt (Ringwulst)
- 15: Ringnut
- 16: Umfangswand
- 17: Bodenfläche
- 18: Auslassöffnung

## Patentansprüche

1. Getränkezubereitungsvorrichtung (1), insbesondere Kaffeemaschine, mit einer Einrichtung zum Verarbeiten einer Flüssigkeit, insbesondere zum Erwärmen und/oder Aufschäumen von Milch, und mit einer, insbesondere einen flexiblen Schlauch (9) umfassenden, ein einen Fluidkanal (10) umfassendes Anschlussende (4) zum fluidleitenden, lösbaren Verbinden mit einem Vorratsbehälter (3), insbesondere einem Milchvorratsbehälter, aufweisenden Verbindungsleitung (2), über die der Einrichtung (1) zum Verarbeiten der Flüssigkeit Flüssigkeit zuführbar ist, und mit Reinigungsmediumversorgungsmitteln zum Durchspülen der Verbindungsleitung (2) mit einem Reinigungsmedium, insbesondere Wasser und/oder Dampf, in einer Reinigungsposition der Verbindungsleitung (2), in der das Anschlussende (4) über Fixiermittel (8) relativ zu einem Auffangbehältnis (6) für das Reinigungsmedium, insbesondere einer Tropfschale, fixiert und die Verbindungsleitung (2) fluidleitend mit dem Auffangbehältnis (6) verbunden ist, wobei das Anschlussende (4) eine Stirnseite (12) und eine sich in einer Umfangsrichtung um den Fluidkanal (10) erstreckende Außenumfangsmantelfläche (11) aufweist,
wobei,
das Anschlussende (4) in der Reinigungsposition derart in eine fluidleitend mit dem Auffangbehältnis (6) verbundene Spülkammer (5) mit seiner Außenumfangsmantelfläche (11) hineinragt, dass diese mit dem Spülkammer (5) über die Verbindungsleitung (2) zuführbarem und sich in der Spülkammer (5) rückstauendem Reinigungsmedium spülbar ist
**dadurch gekennzeichnet,**
**dass** die Spülkammer (5) mindestens eine Auslassöffnung (18) aufweist, über die Reinigungsmedium in das Auffangbehältnis (6) aus der Spülkammer (5) abströmen kann.

2. Getränkezubereitungsvorrichtung (1) nach Anspruch 1,
**dadurch gekennzeichnet,**
**dass** eine freie Querschnittsfläche der mindestens einen Auslassöffnung (18), insbesondere der freien Auslassöffnungen (18), kleiner dimensioniert ist als eine freie Querschnittsfläche der Verbindungsleitung (2).

3. Getränkezubereitungsvorrichtung (1) nach einem der vorhergehenden Ansprüche,
**dadurch gekennzeichnet,**
**dass** die Reinigungsmediumversorgungsmittel derart dimensioniert und/oder angesteuert sind, dass in die Spülkammer (5) mehr Reinigungsmedium in einer Zeitspanne über die Verbindungsleitung (2) zuströmt als über die mindestens eine Auslassöffnung (18) in Richtung Auffangbehältnis (6) abströmt.

4. Getränkezubereitungsvorrichtung (1) nach einem der vorhergehenden Ansprüche,
**dadurch gekennzeichnet,**
**dass** die Außenumfangsmantelfläche (11) in der Reinigungsposition, insbesondere vollumfänglich, in radialer Richtung bezogen auf eine Längserstreckung des Fluidkanals (10) von einer Umfangswand (16) der Spülkammer (5), insbesondere um eine Strecke von mindestens 2mm, bevorzugt von mindestens 4mm, ganz besonders bevorzugt von mindestens 6mm, noch weiter bevorzugt von mindestens 10mm, beabstandet ist.

5. Getränkezubereitungsvorrichtung (1) nach einem der vorhergehenden Ansprüche,
**dadurch gekennzeichnet,**
**dass** die Außenumfangsmantelfläche (11) entlang der Längserstreckung der Verbindungsleitung (2) bis zu einer radial über die Außenumfangsmantelfläche (11) vorstehende Ringschulter (13) des Anschlussendes (4) reicht, die bevorzugt die Spülkammer (5) in der Reinigungsposition begrenzt.

6. Getränkezubereitungsvorrichtung (1) nach einem der vorhergehenden Ansprüche,
**dadurch gekennzeichnet,**
**dass** die Spülkammer (5) einen, insbesondere einem Einsteckende zum Einstecken des Anschlussendes (4) gegenüberliegende Bodenfläche (17) aufweist, die gegenüber einer von einer Grundfläche der Getränkezubereitungsvorrichtung (1) definierten horizontalen Aufstellfläche geneigt ist.

7. Getränkezubereitungsvorrichtung (1) nach einem der vorhergehenden Ansprüche,
**dadurch gekennzeichnet,**
**dass** die Fixiermittel (8) an der Spülkammer (5) festgelegt oder einstückig mit dieser ausgebildet sind.

8. Getränkezubereitungsvorrichtung (1) nach einem der vorhergehenden Ansprüche,
**dadurch gekennzeichnet,**
**dass** die Fixiermittel (8) aus einem Elastomermaterial ausgebildet sind oder solches umfassen, zum klemmenden Fixieren und/oder formschlüssigen Lösen entgegen einer Einsteckrichtung.

9. Getränkezubereitungsvorrichtung (1) nach einem der vorhergehenden Ansprüche,
**dadurch gekennzeichnet,**
**dass** die Spülkammer (5) insbesondere lösbar, bevorzugt durch Verrasten, am Auffangbehältnis (6), insbesondere einer Umfangswand (16) des Auffangbehältnisses (6) oder einem Auffangbehältnisdeckel, bevorzugt einem Topfgitter, fixiert ist oder an einem Getränkezubereitungsvorrichtungsgehäuse.

10. Getränkezubereitungsvorrichtung (1) nach einem der vorhergehenden Ansprüche,
**dadurch gekennzeichnet,**
**dass** die in der Spülkammer (5) mit Reinigungsmedium spülbare Außenumfangsmantelfläche (11) rotationssymmetrisch ist und/oder eine Erstreckung entlang der Längserstreckung der Verbindungsleitung (2) zwischen 3mm und 20mm, insbesondere zwischen 3mm und 12mm, bevorzugt zwischen 5mm und 10mm aufweist.

11. Verfahren zum Reinigen einer, insbesondere einen flexiblen Schlauch (9) umfassenden, ein einen Fluidkanal (10) umfassendes Anschlussende (4) zum fluidleitenden, lösbaren Verbinden mit einem Vorratsbehälter (3), insbesondere einem Milchvorratsbehälter, aufweisenden Verbindungsleitung (2) einer Getränkezubereitungsvorrichtung (1), insbesondere nach einem der vorhergehenden Ansprüche, wobei über die Verbindungsleitung (2) eine Einrichtung zum Verarbeiten von Flüssigkeit, insbesondere zum Erwärmen und/oder Aufschäumen von Milch mit Flüssigkeit, insbesondere mit Milch versorgbar ist und/oder während eines Getränkeproduktionsbetriebsmodus versorgt wird, wobei die Verbindungsleitung (2) in einer Reinigungsposition, in der das Anschlussende (4) über Fixiermittel (8) relativ zu einem Auffangbehältnis (6) für das Reinigungsmedium, insbesondere einer Tropfschale, fixiert und die Verbindungsleitung (2) fluidleitend mit dem Auffangbehältnis (6) verbunden ist mit einem Reinigungsmedium, insbesondere Wasser und/oder Dampf, durchspült wird, wobei das Anschlussende (4) eine Stirnseite (12) und eine sich in einer Umfangsrichtung um den Fluidkanal (10) erstreckende Außenumfangsmantelfläche (11) aufweist,
wobei,
das Anschlussende (4) in der Reinigungsposition in eine fluidleitend mit dem Auffangbehältnis (6) verbundene Spülkammer (5) mit seiner Außenumfangsmantelfläche (11) hineinragt, und dass sich das über die Verbindungsleitung (2) zugeführte Reinigungsmedium in der Spülkammer (5) rückstaut und die Außenumfangsmantelfläche (11) spült,
**dadurch gekennzeichnet,**
**dass** die Spülkammer (5) mindestens eine Auslassöffnung (18) aufweist, über die Reinigungsmedium in das Auffangbehältnis (6) aus der Spülkammer (5) abströmt.

## Claims

1. A beverage preparation device (1), in particular a coffee machine, comprising a device for processing a liquid, in particular for heating and/or frothing milk, and comprising a connecting conduit (2) having a flexible tube (9), in particular, and a connection end (4) comprising a fluid channel (10) for a detachable fluid communication with a storage tank (3), in particular a milk storage tank, through which the device (1) can be supplied with liquid for processing the liquid, and comprising cleaning agent supply means for flushing the connecting conduit (2) by means of a cleaning agent, in particular water and/or steam, in a cleaning position of the connecting conduit (2) in which the connection end (4) is fixed relative to a collection container (6) for the cleaning agent, in particular a drip tray, by means of fixing agents (8) and in which the connecting conduit (2) is in fluid communication with the collection container (6), the connection end (4) having an end face (12) and an outer circumferential surface (11) extending in a circumferential direction about the fluid channel (10), the connection end (4) in the cleaning position protruding into a rising chamber (5) in fluid communication with the collection container (6) with its outer circumferential surface (11) in such a manner that it can be rinsed by means of the cleaning agent which can be supplied by the rinsing chamber (5) via the connecting conduit (2) and which is backlogged in the rinsing chamber (5),
**characterized in that**
the rinsing chamber (5) has at least one outlet opening (18) through which the cleaning agent can flow out of the rinsing chamber (5) into the collection container (6).

2. The beverage preparation device (1) according to claim 1,
**characterized in that**
a free cross-sectional area of the at least one outlet opening (18), in particular of the free outlet openings (18) is smaller than a free cross-sectional area of the connecting conduit (2).

3. The beverage preparation device (1) according to any one of the preceding claims,
**characterized in that**
the cleaning agent supply means are dimensioned and/or controlled in such a manner that, in a given time, a higher amount of the cleaning agent flows into the rinsing chamber (5) via the connecting circuit (2) than the amount of cleaning agent which flows towards the collection container (6) via the at least one outlet opening (18).

4. The beverage preparation device (1) according to any one of the preceding claims,
**characterized in that**
the outer circumferential surface (11) is, in particular entirely, spaced apart from a peripheral wall (16) of the rinsing chamber (5) in the radial direction referring to a longitudinal extension of the fluid channel (10) when in the cleaning position, in particular by a distance of at least 2 mm, preferably of at least 4 mm, particularly preferably of at least 6 mm, more preferably of at least 10 mm.

5. The beverage preparation device (1) according to any one of the preceding claims,
**characterized in that**
the outer circumferential surface (11) extends along the longitudinal extension of the connecting conduit (2) to an annular shoulder (13), which projects radially over the outer circumferential surface (11) of the connection end (4), preferably delimiting the rinsing chamber (5) in the cleaning position.

6. The beverage preparation device (1) according to any one of the preceding claims,
**characterized in that**
the rinsing chamber (5) has a bottom surface (17), in particular opposing an insertion end for inserting the connection end (4), which is inclined to a horizontal supporting surface defined by a base area of the beverage preparation device (1).

7. The beverage preparation device (1) according to any one of the preceding claims,
**characterized in that**
the fixing agents (8) are fixed to the rinsing chamber (5) or formed in one piece with said rinsing chamber.

8. The beverage preparation device (1) according to any one of the preceding claims,
**characterized in that**
the fixing agents (8) are made of an elastomer material or comprise such an elastomer material for a clamping fixation and/or a positive release against an insertion direction.

9. The beverage preparation device (1) according to any one of the preceding claims,
**characterized in that**
the rising chamber (5) is fixed, in particular detachably, to the collection container (6), in particular a peripheral wall (16) of the collection container (6) or a lid of the collection container, preferably a pot grid, or to a beverage preparation device housing, preferably by locking.

10. The beverage preparation device (1) according to any one of the preceding claims,
**characterized in that**
the outer circumferential surface (11) which can be rinsed in the rinsing chamber (5) by means of the cleaning agent is rotationally symmetrical and/or the extension along the longitudinal extension of the connecting circuit (2) is between 3 mm and 20 mm, in particular between 3 mm and 12 mm, preferably between 5 mm and 10 mm.

11. A method for cleaning a connecting conduit (2) of a beverage preparation device (1) having a flexible tube (9), in particular, a connection end (4) comprising a fluid channel (10) for a detachable fluid communication with a storage tank (3), in particular a milk storage tank, in particular according to any one of the preceding claims, a device for processing liquid, in particular for heating or frothing milk may be supplied with a liquid, in particular milk, and/or being supplied with said liquid during the beverage preparation operating mode, the connecting conduit (2) being fixed relative to a collection container (6) for the cleaning agent, in particular a drip tray, by means of fixing agents (8) and when in the cleaning position and the connecting conduit (2) being in fluid communication with the collection container (6), being flushed using a cleaning agent, in particular water and/or steam, the connection end (4) having an end face (12) and an outer circumferential surface (11) extending in a circumferential direction about the fluid channel (10),
the connection end (4) in the cleaning position protruding into a rising chamber (5) in fluid communication with the collection container (6) with its outer circumferential surface (11), and the cleaning agent which is supplied via the connecting conduit (2) is backlogged in the rinsing chamber (5) and rinses the outer circumferential surface (11),
**characterized in that**
the rinsing chamber (5) has at least one outlet opening (18) through which the cleaning agent flows out of the rinsing chamber (5) into the collection container (6).

## Revendications

1. Dispositif de préparation de boissons (1), notamment une machine à café, ayant un mécanisme de traitement de liquide, notamment un mécanisme de chauffage et/ou de moussage de lait, et comprenant une conduite de liaison (2) comprenant notamment un tuyau (9) flexible et une extrémité de raccordement (4) comprenant un canal de fluide (10) pour une communication fluidique et détachable avec un réservoir (3), notamment un réservoir de lait, par laquelle le dispositif (1) est alimenté en liquide pour traiter le liquide, et comprenant des moyens d'alimentation en agent de nettoyage destinés à rincer la conduite de liaison (2) au agent de nettoyage, notamment à l'eau et/ou vapeur, dans une position de nettoyage de la conduite de liaison (2) dans laquelle l'extrémité de raccordement (4) est fixée par des moyens de fixation (8) par rapport à un collecteur (6) pour l'agent de nettoyage, notamment un bac récepteur, et dans laquelle la conduite de liaison (2) est en communication fluidique avec le collecteur (6), l'extrémité de raccordement (4) ayant une face frontale (12) et une surface latérale de la circonférence extérieure (11) s'étendant dans la direction circonférentielle autour du canal de fluide (10), l'extrémité de raccordement (4) dans la position de nettoyage dépasse dans une chambre de rinçage (5) qui est en communication fluidique avec le collecteur (6) avec la surface latérale de la circonférence extérieure (11) de telle manière que la surface latérale de la circonférence extérieure peut être rincée au agent de nettoyage qui peut alimenté par la chambre de rinçage (5) via la conduite de liaison (2) et qui est stocké dans la chambre de rinçage (5),
**caractérisé en ce que**
la chambre de rinçage (5) a au moins une ouverture de sortie (18) par laquelle d'agent de nettoyage peut s'échapper de la chambre de rinçage (5) au collecteur (6).

2. Dispositif de préparation de boissons (1) selon la revendication 1,
**caractérisé en ce**
**qu'**une surface de section transversale libre d'au moins une ouverture de sortie (18), notamment des ouvertures de sortie (18) libres, est plus petite qu'une surface de section transversale libre de la conduite de liaison (2).

3. Dispositif de préparation de boissons (1) selon l'une quelconque des revendications précédentes,
**caractérisé en ce que**
les moyens d'alimentation en agent de nettoyage sont dimensionnés et/ou contrôlés de telle manière que plus d'agent de nettoyage s'école par la conduite de liaison (2) dans la chambre de rinçage (5) que le volume de l'agent de nettoyage qui s'échappe par au moins une ouverture de sortie (18) vers le collecteur (6).

4. Dispositif de préparation de boissons (1) selon l'une quelconque des revendications précédentes,
**caractérisé en ce que**
la surface latérale de la circonférence extérieure (11) est espacée d'une paroi périphérique (16) de la chambre de rinçage (5) dans la position de nettoyage, notamment entièrement, dans la direction radiale par rapport à l'extension longitudinale du canal de fluide (10), notamment d'une distance d'au moins 2 mm, de préférence d'au moins 4 mm, plus préférentiellement d'au moins 6 mm, plus particulièrement préférée d'au moins 10 mm.

5. Dispositif de préparation de boissons (1) selon l'une quelconque des revendications précédentes,
**caractérisé en ce que**
la surface latérale de la circonférence extérieure (11) s'étend le long de l'extension longitudinale de la conduite de liaison (2) jusqu'à un épaulement annulaire (13) de l'extrémité de raccordement (4) qui font saillie radialement sur la surface latérale de la circonférence extérieure (11) et qui limite la chambre de rinçage (5) dans la position de nettoyage.

6. Dispositif de préparation de boissons (1) selon l'une quelconque des revendications précédentes,
**caractérisé en ce que**
la chambre de rinçage (5) a une surface au sol (17), notamment opposée à une extrémité insérable destinée à insérer l'extrémité de raccordement (4), qui est inclinée par rapport à une surface d'appui horizontale qui est définie par une surface de base du dispositif de préparation de boissons.

7. Dispositif de préparation de boissons (1) selon l'une quelconque des revendications précédentes,
**caractérisé en ce que**
les moyens de fixation (8) sont fixés sur la chambre de rinçage (5) ou réalisés en une pièce avec ladite chambre de rinçage.

8. Dispositif de préparation de boissons (1) selon l'une quelconque des revendications précédentes,
**caractérisé en ce que**
les moyens de fixation (8) sont réalisés en matière élastomère ou comprennent ladite matière pour une fixation par serrage et/ou un détachement par conjugaison à l'opposé d'une direction d'insertion.

9. Dispositif de préparation de boissons (1) selon l'une quelconque des revendications précédentes,
**caractérisé en ce que**
la chambre de rinçage (5) est fixée, notamment de manière détachable, sur le collecteur (6), notamment une paroi périphérique (16) du collecteur (6) ou un couvercle du collecteur, de préférence une grille de casserole, ou sur un boîtier du dispositif de préparation de boissons.

10. Dispositif de préparation de boissons (1) selon l'une quelconque des revendications précédentes,
**caractérisé en ce que**
la surface latérale de la circonférence extérieure (11), qui peut être rincée dans la chambre de rinçage (5) au moyen d'agent de nettoyage, est réalisée en symétrie de rotation et/ou que ladite surface a une extension le long de l'extension longitudinale de la conduite de liaison (2) entre 3 mm et 20 mm, notamment entre 3 mm and 12 mm, de préférence entre 5 mm et 10 mm.

11. Procédé de nettoyage d'une conduite de liaison (2) d'un dispositif de préparation de boisson (1) ayant un tuyau (9) flexible et une extrémité de raccordement (4) comprenant un canal de fluide (10) pour une communication fluidique et détachable avec un réservoir (3), notamment un réservoir de lait, notamment selon l'une quelconque des revendications précédentes, le mécanisme de traitement de liquide, notamment un mécanisme de chauffage et/ou de moussage de lait, pouvant être alimenté et/ou étant alimenté en liquide par la conduite de liaison (2) pendant le mode de fonctionnement de préparation de boissons, la conduite de liaison (2) étant fixée par des moyens de fixations (8) par rapport à un collecteur (6) pour l'agent de nettoyage, notamment un bac récepteur, et la conduite de liaison (2) étant en communication fluidique avec le collecteur (6) et étant rincé au agent de nettoyage, notamment à l'eau et/ou vapeur, l'extrémité de raccordement (4) ayant une face frontale (12) et une surface latérale de la circonférence extérieure (11) s'étendant dans la direction circonférentielle autour du canal de fluide (10),
l'extrémité de raccordement (4) dans la position de nettoyage dépassant dans une chambre de rinçage (5) qui est en communication fluidique avec le collecteur (6) avec la surface latérale de la circonférence extérieure (11), et que l'agent de nettoyage, qui est alimenté via la conduite de liaison (2) et qui est stocké dans la chambre de nettoyage (5), rince la surface latérale de la circonférence extérieure (11),
**caractérisé en ce que**
la chambre de rinçage (5) a au moins une ouverture de sortie (18) par laquelle d'agent de nettoyage s'échappe de la chambre de rinçage (5) au collecteur (6).
